# EUROPEAN PATENT APPLICATION

(11) **EP 3 037 985 A1**
(43) Date of publication of application: **29.06.2016**
(21) Application number: 14837976.1
(22) Date of filing: 21.08.2014
(51) Int. Cl.: G06F 17/30

(54) **SEARCH METHOD AND SYSTEM, SEARCH ENGINE AND CLIENT**

(30) Priority: 21.08.2013 CN 201310367193
(71) Applicant: Baidu Online Network Technology (Beijing) Co., Ltd, Beijing 100085 (CN)
(72) Inventor: WU, Guozhong, Beijing 100085 (CN); LIU, Yang, Beijing 100085 (CN)
(74) Representative: Romano, Giuseppe
(86) International application number: PCT/CN2014/084940
(87) International publication number: WO 2015/024522

(57) **Abstract**

Proposed in the present invention are a search method and system, a search engine and a client. The search method comprises: a search engine acquiring a search word sent by a client; the search engine acquiring a plurality of search results according to the search word, and respectively acquiring original edition webpages corresponding to at least partial search results in the plurality of search results; and the search engine providing the plurality of search results and the original edition webpages corresponding to the at least partial search results to the client, and displaying same by the client. The method in the embodiments of the present invention provides a more convenient way to obtain an original edition webpage, which enables a client to access the original edition webpage easily, thereby increasing the probability of the original edition webpage to be clicked, and increasing the attention degree paid on the original edition webpage by a client user.

## Description

### FIELD

The present disclosure relates to a search technology, and more particularly to a search method, a search system, a search engine and a client.

### BACKGROUND

Presently, the plurality of search results in a search result page returned from a search engine are obtained by processing and sorting with complex algorithms, such that the sorting priority is required to be determined by considering many factors comprehensively. The present problem is that, the original webpage cannot show in the top-ranked search results due to the bad comprehensive factor such as the search ranking of the website of the original webpage, while webpages referring to the original webpage are in the top-ranked search results. Also, many pirate webpages and reprint webpages do not mark the provenance of content, thus, the access manners to the original webpage are reduced and the probability of clicking the original webpage is low.

### SUMMARY

The present disclosure seeks to solve the problems above to at least some extent.

Accordingly, a first objective of the present disclosure is to provide a search method. The search method provides a manner for acquiring an original webpage more conveniently, such that the client may access the original webpage easily, thus increasing the probability of clicking the original webpage and causing the user of the client to lay more emphasis on the original webpage.

A second objective of the present disclosure is to provide a search system.

A third objective of the present disclosure is to provide a search engine.

A fourth objective of the present disclosure is to provide a client.

A fifth objective of the present disclosure is to provide a program.

A sixth objective of the present disclosure is to provide a storage medium.

In order to achieve the above objectives, according to embodiments of a first aspect of the present disclosure, a search method is provided, including following steps:
acquiring by a search engine a search term sent from a client; acquiring by the search engine a plurality of search results according to the search term, and acquiring original webpages corresponding to at least part of the plurality of search results respectively; and
providing by the search engine the plurality of search results and the original webpages corresponding to the at least part of the plurality of search results to the client so as to display the plurality of search results and the original webpages via the client.

With the search method according to embodiments of the present disclosure, when providing a search result to the client, the search engine associates the search result with an original webpage thereof, and the original webpage of the search result is displayed as well. On one hand, if the search result is top-ranked, the original webpage of the search result is displayed at the top-ranked position in the case that the original webpage exists. A manner for acquiring the original webpage more conveniently is provided, such that the client may access the original webpage easily, thus increasing the probability of clicking the original webpage and causing the user of the client to lay more emphasis on the original webpage. Without changing the ranking of the search results, the user not only gains convenience, but also the respect and the support in action for the original webpage from the search engine are emphasized. On the other hand, more associated content and knowledge may be found when the user views the original webpage, for example, an author's own blog may contain more knowledge and papers in related art, and thus the user experience is improved.

In order to achieve the above objectives, according to embodiments of a second aspect of the present disclosure, a search system is provided, including: a client and a search engine. The client is configured to send a search term to the search engine, and display a content returned from the search engine. The search engine is configured to acquire the search term, to acquire a plurality of search results according to the search term, to acquire original webpages corresponding to at least part of the plurality of search results respectively, and to provide the plurality of search results and the original webpages corresponding to the at least part of the plurality of search results to the client.

With the search system according to embodiments of the present disclosure, when providing a search result to the client, the search engine associates the search result with an original webpage thereof, and the original webpage of the search result is displayed as well. On one hand, if the search result is top-ranked, the original webpage of the search result is displayed at the top-ranked position in the case that the original webpage exists. A manner for acquiring the original webpage more conveniently is provided, such that the client may access the webpage easily, thus increasing the probability of clicking the original webpage and causing the user of the client to lay more emphasis on the original webpage. Without changing the ranking of the search results, the user not only gains convenience, but also the respect and the support in action for the original webpage from the search engine are emphasized. On the other hand, more associated content and knowledge may be found when the user views the original webpage, for example, an author's own blog may contain more knowledge and papers in related art, and thus the user experience is improved.

In order to achieve the above objectives, according to embodiments of a third aspect of the present disclosure, a search engine is provided, including: a search term acquiring module, configured to acquire a search term sent from a client; a search result acquiring module, configured to acquire a plurality of search results according to the search term, and to acquire original webpages corresponding to at least part of the plurality of search results respectively; and a search result providing module, configured to provide the plurality of search results and the original webpages corresponding to the at least part of the plurality of search results to the client so as to display the plurality of search results and the original webpages via the client.

With the search engine according to embodiments of the present disclosure, when a search result is provided to the client, the search result is associated with an original webpage thereof, such that the client may also display the original webpage of the search result. On one hand, if the search result is top-ranked, the original webpage of the search result is displayed at the top-ranked position in the case that the original webpage exists. A manner for acquiring the original webpage more conveniently is provided, such that the client may access the webpage easily, thus increasing the probability of clicking the original webpage and causing the user of the client to lay more emphasis on the original webpage. Without changing the ranking of the search results, the user not only gains convenience, but also the respect and the support in action for the original webpage from the search engine are emphasized. On the other hand, more associated content and knowledge may be found when the user views the original webpage, for example, an author's own blog may contain more knowledge and papers in related art, and thus the user experience is improved.

In order to achieve the above objectives, according to embodiments of a fourth aspect of the present disclosure, a client is provided, including: a search term sending module, configured to send a search term to a search engine; a search result acquiring module, configured to acquire a plurality of search results and original webpages corresponding to at least part of the plurality of search results sent by the search engine according to the search term; and a search result displaying module, configured to display the plurality of search results and the original webpages corresponding to the at least part of the plurality of search results.

With the client according to embodiments of the present disclosure, the search result and the original webpage thereof sent from the search engine may be acquired and the original webpage of the search result is displayed. On one hand, if the search result is top-ranked, the original webpage of the search result is displayed at the top-ranked position in the case that the original webpage exists. A manner for acquiring the original webpage more conveniently is provided, such that the client may access the webpage easily, thus increasing the probability of clicking the original webpage and causing the user of the client to lay more emphasis on the original webpage. On the other hand, more associated content and knowledge may be found when the user views the original webpage, for example, an author's own blog may contain more knowledge and papers in related art, and thus the user experience is improved.

In order to achieve the above objectives, according to embodiments of a fifth aspect of the present disclosure, a program is provided, when executed by a device, causes the device to execute the search method according to the embodiments of the first aspect of the present disclosure.

With the program according to embodiments of the present disclosure, when providing a search result to the client, the search engine associates the search result with an original webpage thereof, and the original webpage of the search result is displayed as well. On one hand, if the search result is top-ranked, the original webpage of the search result is displayed at the top-ranked position in the case that the original webpage exists. A manner for acquiring the original webpage more conveniently is provided, such that the client may access the webpage easily, thus increasing the probability of clicking the original webpage and causing the user of the client to lay more emphasis on the original webpage. Without changing the ranking of the search results, the user not only gains convenience, but also the respect and the support in action for the original webpage from the search engine are emphasized. On the other hand, more associated content and knowledge may be found when the user views the original webpage, for example, an author's own blog may contain more knowledge and papers in related art, and thus the user experience is improved.

In order to achieve the above objectives, according to embodiments of a sixth aspect of the present disclosure, a storage medium having one or more programs stored therein is provided. When executed by a device, the one or more programs cause the device to execute the search method according to the embodiments of the first aspect of the present disclosure.

With the storage medium according to embodiments of the present disclosure, when providing a search result to the client, the search engine associates the search result with an original webpage thereof, and the original webpage of the search result is displayed as well. On one hand, if the search result is top-ranked, the original webpage of the search result is displayed at the top-ranked position in the case that the original webpage exists. A manner for acquiring the original webpage more conveniently is provided, such that the client may access the webpage easily, thus increasing the probability of clicking the original webpage and causing the user of the client to lay more emphasis on the original webpage. Without changing the ranking of the search results, the user not only gains convenience, but also the respect and the support in action for the original webpage from the search engine are emphasized. On the other hand, more associated content and knowledge may be found when the user views the original webpage, for example, an author's own blog may contain more knowledge and papers in related art, and thus the user experience is improved.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is a flow chart of a search method according to an embodiment of the present disclosure;
Fig. 2(a) is a flow chart of a search method according to another embodiment of the present disclosure;
Fig. 2(b) is a schematic diagram showing search results displayed on the client according to an embodiment of the present disclosure;
Fig. 3 is a flow chart of acquiring a correspondence between a webpage and an original webpage according to an embodiment of the present disclosure;
Fig. 4 is a flow chart of acquiring a correspondence between a webpage and an original webpage according to another embodiment of the present disclosure;
Fig. 5 is a flow chart of acquiring a correspondence between a webpage and an original webpage according to a further embodiment of the present disclosure;
Fig. 6 is a flow chart of a search method according to a further embodiment of the present disclosure;
Fig. 7 is a block diagram of a search system according to an embodiment of the present disclosure;
Fig. 8 is a block diagram of a search engine according to an embodiment of the present disclosure;
Fig. 9 is a block diagram of a search engine according to another embodiment of the present disclosure;
Fig. 10 is a block diagram of a search engine according to a further embodiment of the present disclosure; and
Fig. 11 is a block diagram of a client according to an embodiment of the present disclosure.

### DETAILED DESCRIPTION

Embodiments of the present disclosure will be described in detail in the following descriptions, examples of which are shown in the accompanying drawings, in which the same or similar elements and elements having same or similar functions are denoted by like reference numerals throughout the descriptions. The embodiments described herein with reference to the accompanying drawings are explanatory and illustrative, which are used to generally understand the present disclosure. The embodiments shall not be construed to limit the present disclosure. Instead, the embodiments of the present disclosure comprise all the variants, modifications and their equivalents within the spirit and scope of the present disclosure as defined by the claims.

In the description of the present disclosure, it should be understood that, terms such as "first" and "second" are used herein for purposes of description and are not intended to indicate or imply relative importance or significance or to imply the number of indicated technical features. In the present invention, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations. In addition, in the description of the present invention, "a plurality of" means two or more than two, unless specified otherwise.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, in which the function may be executed not in the order shown or discussed herein, but may be executed essentially simultaneously or in contrary order, which should be understood by those skilled in the art.

In order to solve the ranking problem of the search results in an original webpage, and also to increase the access manner to the original webpage and the probability of clicking the original webpage, and to facilitate the viewing of the original content by the user and the creation of the original content (for example, the support for the content in the original blog may contribute to the generation of more high-quality internet content) as well, a search method, a search system, a search engine and a client are provided in the present disclosure. The associated original webpage may be displayed in search results, such that a manner of acquiring the original webpage more conveniently is provided to the user without changing the ranking of the search results, thus not only facilitating the user but also emphasizing the respect and the support in action for the original webpage from the search engine.

A search method includes following steps: acquiring by a search engine a search term sent from a client; acquiring by the search engine a plurality of search results according to the search term and acquiring original webpages corresponding to at least part of the plurality of search results respectively; and providing by the search engine the plurality of search results and the original webpages corresponding to the at least part of the plurality of search results to the client so as to display the plurality of search results and the original webpages via the client.

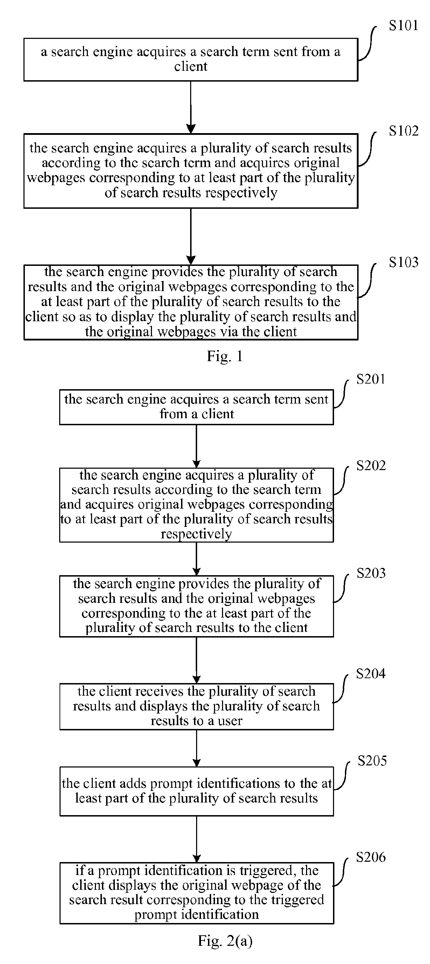

Fig. 1 is a flow chart of a search method according to an embodiment of the present disclosure.

As shown in Fig. 1, the search method includes following steps.

In step S101, a search engine acquires a search term sent from a client.

In an embodiment of the present disclosure, the client is a PC (personal computer) or a mobile terminal, in which the mobile terminal may be a hardware device with various operating systems, such as a smart phone, a panel computer, a personal digital assistant, an E-Book or the like. Specifically, the client may access the search engine and send the search term to the search engine via a browser application, or may send the search term to the search engine in other shortcut manners (such as a search bar), which is not limited herein.

In step S102, the search engine acquires a plurality of search results according to the search term and acquires original webpages corresponding to at least part of the plurality of search results respectively.

Specifically, after acquiring the search term, the search engine acquires the plurality of corresponding search results according to the search term, and acquires corresponding original webpages according to each search result. It should be understood that, all the search results do not have the original webpage. If there is an original webpage for a search result, the corresponding original webpage is acquired. If there is no original webpage for the search result, then the search result may be an original webpage or the search engine cannot acquire the corresponding original webpage.

After a web crawler crawls the webpages, the search engine may calculate the correspondence between a webpage and an original webpage according to a preset algorithm, in which the correspondence includes a correspondence indicating whether the webpage is an original webpage, and store the calculation result forever, for example, the calculation result may be stored in a database or a file system. The storage device is not limited herein, and the storage form may be various, for example, a typical storage form may be [webpage A, original webpage 1, original webpage 2, ...], [webpage B, original webpage 3, original webpage 4, ... ], or the like, which is not limited herein. The advantage of storage is that, the information is convenient to access quickly and acquire, and the search engine may read the corresponding original webpage directly after acquiring the plurality of search results. The method of calculating the correspondence between the webpage and the original webpage according to a preset algorithm will be described in detail in following embodiments.

It should be understood that, in an ideal case, if there is an original webpage for a search result, one original webpage corresponds to the search result. However, in an actual calculation, there may be two or more original webpages, the possible reason for this situation is that, there are multiple webpages in conformity with the threshold range defined by the preset algorithm during the calculation of the relativity of contents in the webpage and the matching degree of the original webpage, such that multiple original webpages are matched. Actually, there is only one original webpage in theory. If there are multiple original webpages for one search result, it means that the reprint or pirate skills are exquisite, and the algorithm system of the search engine is disturbed to some extent. However, this situation is allowed, which is normal in the search engine system, just as the search engine optimization method for improving the ranking of webpage exists.

In step S103, the search engine provides the plurality of search results and the original webpages corresponding to the at least part of the plurality of search results to the client so as to display the plurality of search results and the original webpages via the client.

With the search method according to embodiments of the present disclosure, when providing a search result to the client, the search engine associates the search result with an original webpage thereof, and the original webpage of the search result is displayed as well. On one hand, if the search result is top-ranked, the original webpage of the search result is displayed at the top-ranked position in the case that the original webpage exists. A manner for acquiring the original webpage more conveniently is provided, such that the client may access the webpage easily, thus increasing the probability of clicking the original webpage and causing the user of the client to lay more emphasis on the original webpage. Without changing the ranking of the search results, the user not only gains convenience, but also the respect and the support in action for the original webpage from the search engine are emphasized. On the other hand, more associated content and knowledge may be found when the user views the original webpage, for example, an author's own blog may contain more knowledge and papers in related art, and thus the user experience is improved.

In order to display the original webpage better, different displaying effects may be designed in the client according to settings in the client. A displaying form is described in the following.

Fig. 2(a) is a flow chart of a search method according to another embodiment of the present disclosure.

As shown in Fig. 2(a), the search method includes following steps.

In step S201, the search engine acquires a search term sent from a client.

In step S202, the search engine acquires a plurality of search results according to the search term and acquires original webpages corresponding to at least part of the plurality of search results respectively.

In step S203, the search engine provides the plurality of search results and the original webpages corresponding to the at least part of the plurality of search results to the client.

In step S204, the client receives the plurality of search results and displays the plurality of search results to a user.

In step S205, the client adds prompt identifications to the at least part of the plurality of search results.

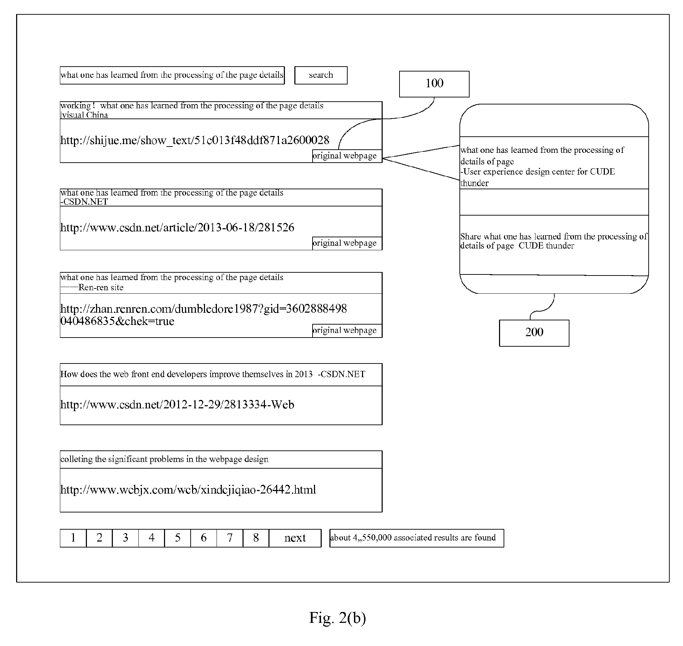

Specifically, after acquiring the search results sent from the search engine, the client may analyze the search results to know which of the search results have the original webpage and which of the search results do not have the original webpage, and then the client adds the prompt identifications to the search results which have the original webpage (i.e., at least part of the plurality of search results) at appropriate positions, for example, at the left side, the right side, the upper part or the lower part. For example, Fig. 2(b) is a schematic diagram of displaying search results on the client according to an embodiment of the present disclosure. As shown in Fig. 2(b), for each search result which has an original webpage, the user is informed that the search result has an original webpage by an icon 100 (or may be other forms, such as a bubble, etc.) located at the right side of the search result.

In step S206, if a prompt identification is triggered, the client displays the original webpage of the search result corresponding to the triggered prompt identification.

Specifically, the prompt identification may be triggered in various ways, for example, by clicking the prompt identification with a mouse or with a gesture on the screen, or by sliding the prompt identification with the mouse or with a gesture. For example, as shown in Fig. 2(b), the user moves the mouse to the icon, a pop-up box 200 is shown at the right side to display the information of the original webpage to the user and guide the user to perform a further click. The user may click for browsing. If the user moves the mouse away from the icon, the pop-up box 200 is closed. In addition, the user may also participate in the protection of the original webpage. An access of "report the non-original webpage" is displayed in the original webpage of the pop-up box 200. More assistance information may be provided to the search engine through the user's participation, thus aiding to find out the non-original webpage. The search engine may also effectively identify whether the report from the user is real and reliable, find out the effective information and filter the hostile attack information according to some strategies.

It should be understood that, there may be multiple original webpages which are displayed to the user, typically the user may distinguish which one is the real original webpage.

With the search method according to embodiments of the present disclosure, the original webpage is prompted via the prompt identification, thus facilitating the reading of the user and further improving the user experience.

In order to achieve the objectives described in the above embodiments, the most important part of the present disclosure is to acquire the correspondence between the webpage and the original webpage. The process of acquiring the correspondence between the webpage and the original webpage will be described in detail below.

In the ideal case, in order to calculate the original webpage associated with each webpage, after acquiring webpages on Internet, the search engine compares the content in a webpage with the contents in the other webpages. If the content in a webpage is almost exactly the same as the content in another webpage, then these two webpages are reprint or piracy for each other. Webpages with the same content are stored in a list, and the time of crawling each webpage in the list by the web crawler is calculated. For example, a simple rule is that the probability of the webpage crawled earliest being the original webpage is highest, because the web crawler may crawl the newly generated webpage content quickly in theory.

However, the calculation in the ideal case is huge. Assuming that the number of webpages is N, the calculation times of calculating the associated original webpage for each webpage is N*N, and thus the calculation times of calculating the associated original webpage for all the webpages is N*N*N. At present, the number of webpages collected by the search engine is about 50 billions, and thus it is difficult to complete this huge calculation and the resource and time consumption is huge too.

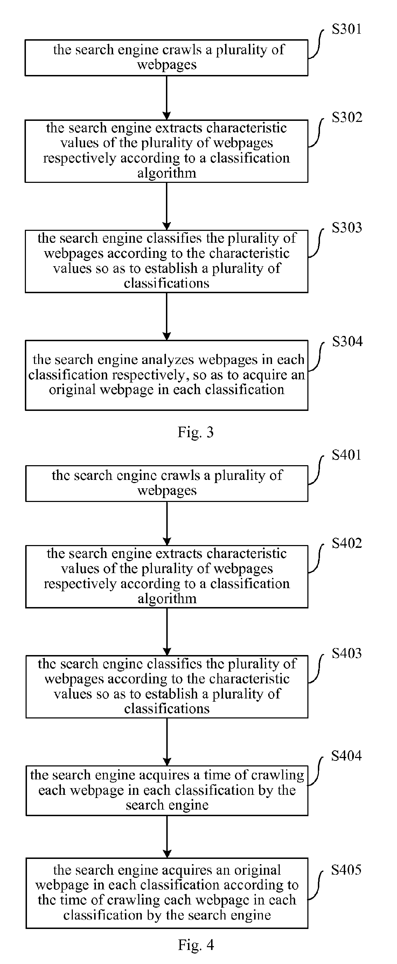

In order to solve this problem and make the technical solution to be realizable, Fig. 3 is a flow chart of acquiring a correspondence between a webpage and an original webpage according to an embodiment of the present disclosure. Specifically, as shown in Fig. 3, following steps are included.

In step S301, the search engine crawls a plurality of webpages.

For example, the search engine may acquire the plurality of webpages on Internet via the web crawler.

In step S302, the search engine extracts characteristic values of the plurality of webpages respectively according to a classification algorithm.

In step S303, the search engine classifies the plurality of webpages according to the characteristic values so as to establish a plurality of classifications.

Specifically, the larger the number of classifications generated by classifying the plurality of webpages with the classification algorithm is, the smaller the number of webpages in each classification is, the better it could be. In the ideal situation, the webpages with similar contents are classified in a same classification.

The classification algorithm may adopt the existing mature machine learning algorithm. The machine learning algorithm is a general algorithm, which has many different modifications, such as a KNN algorithm (k-Nearest Neighbor Algorithm). The basic principle of the KNN algorithm is that, after a new text is given, K texts closest to (the most similar to) the new text in a trained text set are selected, the classification containing the new text is determined according to the classification containing these K texts. For another example, the support vector machine algorithm and the neural network algorithm are widely used in the text classification system. A basic character of this type algorithm is to vectorize the calculation result for the webpage content and then to compare the difference between two vectors in mathematics.

It should be understood that, the webpage content generally contains abundant information, which may include pictures, videos and the like. Thus, various factors should be considered comprehensively when comparing the degrees of similarity of webpage contents.

In step S304, the search engine analyzes webpages in each classification respectively, so as to acquire an original webpage in each classification.

Accordingly, the calculation is reduced greatly. The smaller the number of webpages in each classification is, the less the calculation is. It should be understood that, the limitation in step S304 does not mean that there is an original webpage in each classification, it is possible that there is no original webpage in a classification.

Fig. 4 is a flow chart of acquiring a correspondence between a webpage and an original webpage according to another embodiment of the present disclosure.

As shown in Fig. 4, following steps are included.

In step S401, the search engine crawls a plurality of webpages.

In step S402, the search engine extracts characteristic values of the plurality of webpages respectively according to a classification algorithm.

In step S403, the search engine classifies the plurality of webpages according to the characteristic values so as to establish a plurality of classifications.

In step S404, the search engine acquires a time of crawling each webpage in each classification by the search engine.

In step S405, the search engine acquires an original webpage in each classification according to the time of crawling each webpage in each classification by the search engine.

For example, the webpage crawled earliest is the original webpage.

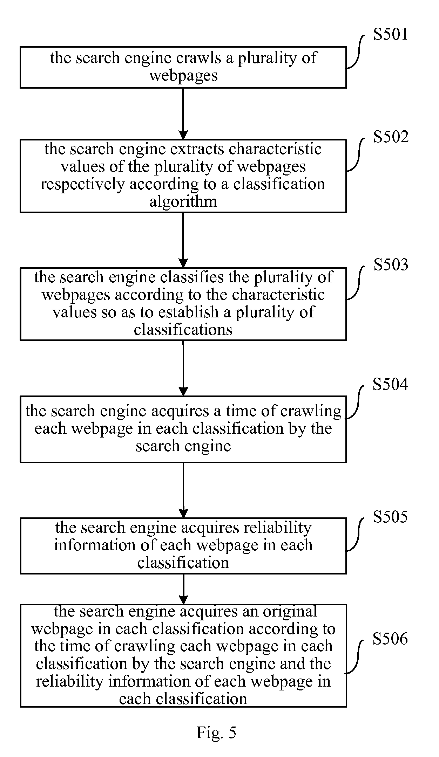

In order to increase the reliability of the original webpage, reliable information is also considered. Fig. 5 is a flow chart of acquiring a correspondence between a webpage and an original webpage according to a further embodiment of the present disclosure.

As shown in Fig. 5, following steps are included.

In step S501, the search engine crawls a plurality of webpages.

In step S502, the search engine extracts characteristic values of the plurality of webpages respectively according to a classification algorithm.

In step S503, the search engine classifies the plurality of webpages according to the characteristic values so as to establish a plurality of classifications.

In step S504, the search engine acquires a time of crawling each webpage in each classification by the search engine.

In step S505, the search engine acquires reliability information of each webpage in each classification.

The order of executing step S504 and step S505 is not limited.

In step S506, the search engine acquires an original webpage in each classification according to the time of crawling each webpage in each classification by the search engine and the reliability information of each webpage in each classification.

In an embodiment of the present disclosure, the reliability information of a webpage includes one or more of provenance information of the webpage, quality information of the webpage and anti-cheat judgment information. Specifically, when acquiring the original webpage, the information (such as the provenance information of the webpage, the quality information of the webpage and the anti-cheat judgment information, etc.) indicating the reliability of the webpage is required to be considered. For example, the reliability of the webpage from an official website is high, the reliability of the webpage with high quality is high, and the reliability of the webpage which is judged as a cheat webpage is low. Thus, the accuracy of the original webpage may be improved by considering the reliability information and the crawling time comprehensively.

In an embodiment of the present disclosure, after analyzing the webpages and acquiring the original webpage, a correspondence between each webpage in a classification and the original webpage is established by the search engine, so as to acquire original webpages corresponding to at least part of search results according to the at least part of search results and the correspondences.

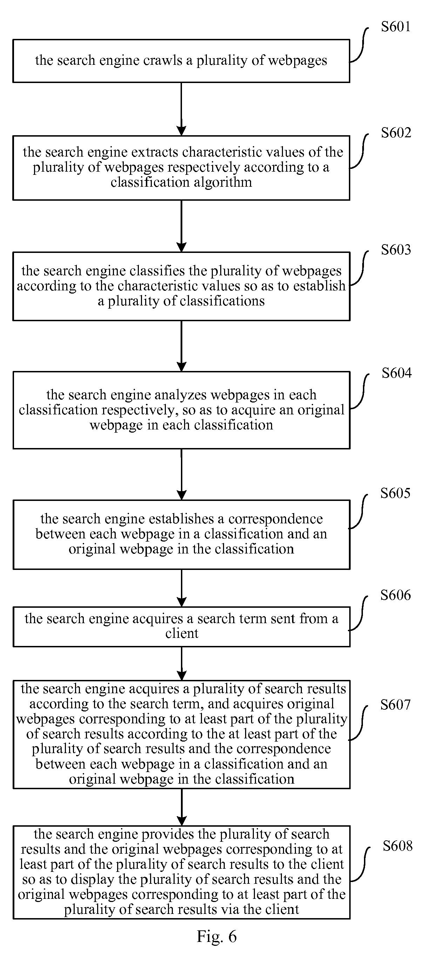

Fig. 6 is a flow chart of a search method according to another embodiment of the present disclosure.

As shown in Fig. 6, following steps are included.

In step S601, the search engine crawls a plurality of webpages.

In step S602, the search engine extracts characteristic values of the plurality of webpages respectively according to a classification algorithm.

In step S603, the search engine classifies the plurality of webpages according to the characteristic values so as to establish a plurality of classifications.

In step S604, the search engine analyzes webpages in each classification respectively, so as to acquire an original webpage in each classification.

In step S605, the search engine establishes a correspondence between each webpage in a classification and an original webpage in the classification.

In step S606, the search engine acquires a search term sent from a client.

In step S607, the search engine acquires a plurality of search results according to the search term, and acquires original webpages corresponding to at least part of the plurality of search results according to the at least part of the plurality of search results and the correspondence between each webpage in a classification and an original webpage in the classification.

In step S608, the search engine provides the plurality of search results and the original webpages corresponding to at least part of the plurality of search results to the client so as to display the plurality of search results and the original webpages corresponding to at least part of the plurality of search results via the client.

With the search method according to embodiments of the present disclosure, the original webpage corresponding to the search result is acquired according to the established correspondence, which is quick and convenient.

In order to implement the above embodiments, embodiments of the present disclosure further provide a search system.

A search system includes a client and a search engine. The client is configured to send a search term to the search engine. The search engine is configured to acquire the search term, to acquire a plurality of search results according to the search term, to acquire original webpages corresponding to at least part of the plurality of search results respectively, and to provide the plurality of search results and the original webpages corresponding to the at least part of the plurality of search results to the client. The client displays a content returned from the search engine.

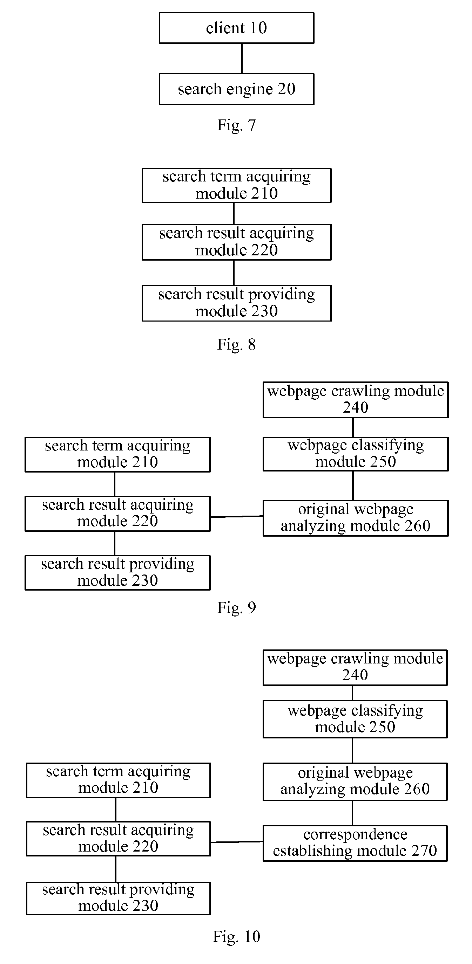

Fig. 7 is a block diagram of a search system according to an embodiment of the present disclosure.

As shown in Fig. 7, the search system includes a client 10 and a search engine 20.

Specifically, the client 10 is configured to send a search term to the search engine 20. In an embodiment of the present disclosure, the client 10 is a PC (personal computer) or a mobile terminal, in which the mobile terminal may be a hardware device with various operating systems, such as a smart phone, a panel computer, a personal digital assistant, an E-Book or the like. The client 10 may access the website of the search engine 20 and send the search term to the search engine 20 via a browser application, or may send the search term to the search engine 20 in other shortcut manners (such as a search bar), which is not limited herein.

The search engine 20 is configured to acquire the search term, to acquire a plurality of search results according to the search term, to acquire original webpages corresponding to at least part of the plurality of search results respectively, and to provide the plurality of search results and the original webpages corresponding to the at least part of the plurality of search results to the client 10. The client 10 displays a content returned from the search engine 20.

More specifically, after acquiring the search term, the search engine 20 acquires a plurality of search results according to the search term, and acquires original webpages corresponding to at least part of the plurality of search results respectively. It should be understood that, all the search results do not have the original webpage. If there is an original webpage for a search result, the corresponding original webpage is acquired. If there is no original webpage for the search result, then the search result may be an original webpage or the search engine cannot acquire the corresponding original webpage.

After a web crawler crawls the webpages, the search engine 20 may calculate the correspondence between a webpage and an original webpage according to a preset algorithm, in which the correspondence includes a correspondence indicating whether the webpage is an original webpage, and store the calculation result forever, for example, the calculation result may be stored in a database or a file system. The storage device is not limited herein, and the storage form may be various, for example, a typical storage form may be [webpage A, original webpage 1, original webpage 2, ...], [webpage B, original webpage 3, original webpage 4, ...], or the like, which is not limited herein. The advantage of storage is that, the information is convenient to access quickly and acquire, and the search engine 20 may read the corresponding original webpage directly after acquiring the plurality of search results. The method of calculating the correspondence between the webpage and the original webpage according to a preset algorithm will be described in detail in following embodiments.

It should be understood that, in an ideal case, if there is an original webpage for a search result, one original webpage corresponds to the search result. However, in an actual calculation, there may be two or more original webpages, the possible reason for this situation is that, there are multiple webpages in conformity with the threshold range defined by the preset algorithm during the calculation of the relativity of contents in webpages and the matching degree of the original webpage, such that multiple original webpages are matched. Actually, there is only one original webpage in theory. If there are multiple original webpages for one search result, it means that the reprint or pirate skills are exquisite, and the algorithm system of the search engine 20 is disturbed to some extent. However, this situation is allowed.

With the search system according to embodiments of the present disclosure, when providing a search result to the client, the search engine associates the search result with an original webpage thereof, and the original webpage of the search result is displayed as well. On one hand, if the search result is top-ranked, the original webpage of the search result is displayed at the top-ranked position in the case that the original webpage exists. A manner for acquiring the original webpage more conveniently is provided, such that the client may access the webpage easily, thus increasing the probability of clicking the original webpage and causing the user of the client to lay more emphasis on the original webpage. Without changing the ranking of the search results, the user not only gains convenience, but also the respect and the support in action for the original webpage from the search engine are emphasized. On the other hand, more associated content and knowledge may be found when the user views the original webpage, for example, an author's own blog may contain more knowledge and papers in related art, and thus the user experience is improved.

In order to display the original webpage better, the client 10 may design different displaying effects according to settings in the client 10. A displaying form is described in the following. Specifically, in an embodiment of the present disclosure, the client 10 is further configured to receive the plurality of search results and to display the plurality of search results to a user, and to add prompt identifications to at least part of the plurality of search results, such that if a prompt identification is triggered, the client displays the original webpage of the search result corresponding to the triggered prompt identification to the user.

More specifically, after acquiring the search results sent from the search engine 20, the client 10 may analyze the search results to know which of the search results have the original webpage and which of the search results do not have the original webpage, and then the client 10 adds the prompt identifications to the search results which have the original webpage (i.e., at least part of the plurality of search results) at appropriate positions, for example, at the left side, the right side, the upper part or the lower part. For example, Fig. 2(b) is a schematic diagram of displaying search results on the client according to an embodiment of the present disclosure. As shown in Fig. 2(b), for each search result which has an original webpage, the user is informed that the search result has an original webpage by an icon 100 (or may be other forms, such as a bubble, etc.) located at the right side of the search result.

Similarly, the prompt identification may be triggered in various ways, for example, by clicking the prompt identification with a mouse or with a gesture on the screen, or by sliding the prompt identification with the mouse or with a gesture. For example, as shown in Fig. 2(b), the user moves the mouse to the icon, a pop-up box 200 is shown at the right side to display the information of the original webpage to the user and guide the user to perform a further click. The user may click for browsing. If the user moves the mouse away from the icon, the pop-up box 200 is closed. In addition, the user may also participate in the protection of the original webpage. An access of "report the non-original webpage" is displayed in the original webpage of the pop-up box 200. More assistance information may be provided to the search engine through the user's participation.

It should be understood that, there may be multiple original webpages which are displayed to the user, typically the user may distinguish which one is the real original webpage.

With the search system according to embodiments of the present disclosure, the original webpage is prompted via the prompt identification, thus facilitating the reading of the user and further improving the user experience.

In order to achieve the objectives described in the above embodiments, the most important part of the present disclosure is to acquire the correspondence between the webpage and the original webpage. In an embodiment of the present disclosure, the search engine 20 is further configured to crawl a plurality of webpages, to extract characteristic values of the plurality of webpages respectively according to a classification algorithm, to classify the plurality of webpages according to the characteristic values so as to establish a plurality of classifications and to analyze webpages in each classification respectively, so as to acquire an original webpage in each classification.

More specifically, the larger the number of classifications generated by classifying the plurality of webpages with the classification algorithm is, the smaller the number of webpages in each classification is, the better it could be. In the ideal situation, the webpages with similar content are classified in a same classification. The classification algorithm may adopt the existing mature machine learning algorithm. The machine learning algorithm is a general algorithm, which has many different modifications, such as a KNN algorithm (k-Nearest Neighbor Algorithm). The basic principle of the KNN algorithm is that, after a new text is given, K texts closest to (the most similar to) the new text in a trained text set are selected, the classification containing the new text is determined according to the classification containing these K texts. For another example, the support vector machine algorithm and the neural network algorithm are widely used in the text classification system. A basic character of this type algorithm is to vectorize the calculation result for the webpage content and then to compare the difference between two vectors in mathematics.

It should be understood that, the webpage content generally contains abundant information, which may include pictures, videos and the like. Thus, various factors should be considered comprehensively when comparing the degrees of similarity of webpage contents.

In an embodiment of the present disclosure, the search engine 20 is further configured to acquire a time of crawling each webpage in each classification by the search engine 20, and to acquire an original webpage in each classification according to the time of crawling each webpage in each classification by the search engine 20. For example, the webpage crawled earliest is the original webpage.

In order to increase the reliability of the original webpage, reliable information is also considered. In an embodiment of the present disclosure, the search engine 20 is further configured to acquire reliability information of each webpage in each classification, and to acquire an original webpage in each classification according to the time of crawling each webpage in each classification by the search engine 20 and the reliability information of each webpage in each classification. In an embodiment of the present disclosure, the reliability information of a webpage includes one or more of provenance information of the webpage, quality information of the webpage and anti-cheat judgment information. Specifically, when acquiring the original webpage, the information (such as the provenance information of the webpage, the quality information of the webpage and the anti-cheat judgment information, etc.) indicating the reliability of the webpage is required to be considered. For example, the reliability of the webpage from an official website is high, the reliability of the webpage with high quality is high, and the reliability of the webpage which is judged as a cheat webpage is low. Thus, the accuracy of the original webpage may be improved by considering the reliability information and the crawling time comprehensively.

In an embodiment of the present disclosure, the search engine 20 is further configured to establish a correspondence between each webpage in a classification and an original webpage in the classification after acquiring the original webpage in the classification, so as to acquire original webpages corresponding to at least part of the plurality of search results according to the at least part of the plurality of search results and the correspondence between each webpage in a classification and an original webpage in the classification. The original webpage corresponding to the search result is acquired according to the established correspondence, which is quick and convenient.

In order to implement the above embodiments, embodiments of the present disclosure provide a search engine.

A search engine, includes a search term acquiring module, configured to acquire a search term sent from a client; a search result acquiring module, configured to acquire a plurality of search results according to the search term, and to acquire original webpages corresponding to at least part of the plurality of search results respectively; and a search result providing module, configured to provide the plurality of search results and the original webpages to the client for displaying the plurality of search results and the original webpages via the client.

Fig. 8 is a block diagram of a search engine according to an embodiment of the present disclosure.

As shown in Fig. 8, the search engine includes a search term acquiring module 210, a search result acquiring module 220 and a search result providing module 230.

Specifically, the search term acquiring module 210 is configured to acquire a search term sent from a client.

The search result acquiring module 220 is configured to acquire a plurality of search results according to the search term, to acquire original webpages corresponding to at least part of the plurality of search results. More specifically, after the search term acquiring module 210 acquires the search term, the search result acquiring module 220 acquires the plurality of corresponding search results according to the search term, and acquires corresponding original webpages according to each search result. If there is an original webpage for a search result, the corresponding original webpage is acquired. If there is no original webpage for the search result, then the search result may be an original webpage or the search engine cannot acquire the corresponding original webpage.

In an ideal case, if there is an original webpage for a search result, one original webpage corresponds to the search result. However, in an actual calculation, there may be two or more original webpages, the possible reason for this situation is that, there are multiple webpages in conformity with the threshold range defined by the preset algorithm during the calculation of the relativity of contents in webpages and the matching degree of the original webpage, such that multiple original webpages are matched. Actually, there is only one original webpage in theory. If there are multiple original webpages for one search result, it means that the reprint or pirate skills are exquisite, and the algorithm system of the search engine is disturbed to some extent. However, this situation is allowed.

The search result providing module 230 is configured to provide the plurality of search results and the original webpages corresponding to at least part of the plurality of search results to the client for displaying the plurality of search results and the original webpages via the client.

With the search engine according to embodiments of the present disclosure, when providing a search result to the client, the search result is associated with an original webpage thereof, and the original webpage of the search result is displayed as well. On one hand, if the search result is top-ranked, the original webpage of the search result is displayed at the top-ranked position in the case that the original webpage exists. A manner for acquiring the original webpage more conveniently is provided, such that the client may access the webpage easily, thus increasing the probability of clicking the original webpage and causing the user of the client to lay more emphasis on the original webpage. Without changing the ranking of the search results, the user not only gains convenience, but also the respect and the support in action for the original webpage from the search engine are emphasized. On the other hand, more associated content and knowledge may be found when the user views the original webpage, for example, an author's own blog may contain more knowledge and papers in related art, and thus the user experience is improved.

Fig. 9 is a block diagram of a search engine according to another embodiment of the present disclosure.

As shown in Fig. 9, the search engine includes a search term acquiring module 210, a search result acquiring module 220, a search result providing module 230, a webpage crawling module 240, a webpage classifying module 250 and an original webpage analyzing module 260.

Specifically, the webpage crawling module 240 is configured to crawl a plurality of webpages. For example, the plurality of webpages on Internet may be acquired via a web crawler.

The webpage classifying module 250 is configured to extract characteristic values of the plurality of webpages and to classify the plurality of webpages according to the characteristic values so as to establish a plurality of classifications. More specifically, the larger the number of classifications generated by classifying the plurality of webpages with the classification algorithm is, the smaller the number of webpages in each classification is, the better it could be. In the ideal situation, the webpages with similar contents are classified in a same classification. The classification algorithm may adopt the existing mature machine learning algorithm. The machine learning algorithm is a general algorithm, which has many different modifications, such as a KNN algorithm (k-Nearest Neighbor Algorithm). The basic principle of the KNN algorithm is that, after a new text is given, K texts closest to (the most similar to) the new text in a trained text set are selected, the classification containing the new text is determined according to the classification containing these K texts. For another example, the support vector machine algorithm and the neural network algorithm are widely used in the text classification system. A basic character of this type algorithm is to vectorize the calculation result for the webpage content and then to compare the difference between two vectors in mathematics. It should be understood that, the webpage content generally contains abundant information, which may include pictures, videos and the like. Thus, various factors should be considered comprehensively when comparing the degrees of similarity of webpage contents.

The original webpage analyzing module 260 is configured to analyze webpages in each classification so as to acquire an original webpage in each classification.

In an embodiment of the present disclosure, the original webpage analyzing module 260 is further configured to acquire a time of crawling each webpage in each classification by the search engine and to acquire the original webpage in each classification according to the time of crawling each webpage in each classification by the search engine. For example, typically the webpage crawled earliest is considered as the original webpage.

In another embodiment of the present disclosure, the original webpage analyzing module 260 is further configured to acquire reliability information of each webpage in each classification, and to acquire the original webpage in each classification according to the time of crawling each webpage in each classification by the search engine and the reliability information of each webpage in each classification. In an embodiment of the present disclosure, the reliability information of a webpage includes one or more of provenance information of the webpage, quality information of the webpage and anti-cheat judgment information. Specifically, when acquiring the original webpage, the information (such as the provenance information of the webpage, the quality information of the webpage and the anti-cheat judgment information, etc.) indicating the reliability of the webpage is required to be considered. For example, the reliability of the webpage from an official website is high, the reliability of the webpage with high quality is high, and the reliability of the webpage which is judged as a cheat webpage is low. Thus, the accuracy of the original webpage may be improved by considering the reliability information and the crawling time comprehensively.

Fig. 10 is a block diagram of a search engine according to another embodiment of the present disclosure.

As shown in Fig. 10, the search engine includes a search term acquiring module 210, a search result acquiring module 220, a search result providing module 230, a webpage crawling module 240, a webpage classifying module 250, an original webpage analyzing module 260 and a correspondence establishing module 270.

Specifically, the correspondence establishing module 270 is configured to establish a correspondence between each webpage in a classification and an original webpage in the classification after the original webpage analyzing module 260 acquires the original webpage in each classification, such that the original webpages corresponding to the at least part of the plurality of search results may be acquired according to the at least part of the plurality of search results and the correspondence. Then, the correspondence is stored forever, for example, stored in a database or a file system. The storage device is not limited herein, and the storage form may be various, for example, a typical storage form may be [webpage A, original webpage 1, original webpage 2, ...], [webpage B, original webpage 3, original webpage 4, ...], or the like, which is not limited herein. The advantage of storage is that, the information is convenient to access quickly and acquire, and the corresponding original webpage may be read directly after the search engine acquires the plurality of search results.

In order to implement the above embodiments, embodiments of the present disclosure further provide a client.

A client, includes a search term sending module, configured to send a search term to a search engine; a search result acquiring module, configured to acquire a plurality of search results and original webpages corresponding to at least part of the plurality of search results sent by the search engine according to the search term; and a search result displaying module, configured to display the plurality of search results and the original webpages corresponding to the at least part of the plurality of search results.

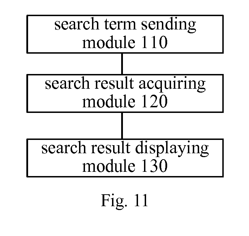

Fig. 11 is a block diagram of a client according to an embodiment of the present disclosure.

As shown in Fig. 11, the client includes a search term sending module 110, a search result acquiring module 120 and a search result displaying module 130.

In an embodiment of the present disclosure, the client is a PC (personal computer) or a mobile terminal, in which the mobile terminal may be a hardware device with various operating systems, such as a smart phone, a panel computer, a personal digital assistant, an E-Book or the like.

Specifically, the search term sending module 110 is configured to send a search term to a search engine. More specifically, the search term sending module 110 may access the search engine and send the search term to the search engine via a browser application, or may send the search term to the search engine in other shortcut manners (such as a search bar), which is not limited herein.

The search result acquiring module 120 is configured to acquire a plurality of search results and original webpages corresponding to at least part of the plurality of search results sent from the search engine according to the search term.

The search result displaying module 130 is configured to display the plurality of search results and the original webpages corresponding to the at least part of the plurality of search results.

With the client according to embodiments of the present disclosure, the search result and the original webpage thereof sent from the search engine may be acquired and the original webpage of the search result is displayed. On one hand, if the search result is top-ranked, the original webpage of the search result is displayed at the top-ranked position in the case that the original webpage exists. A manner for acquiring the original webpage more conveniently is provided, such that the client may access the webpage easily, thus increasing the probability of clicking the original webpage and causing the user of the client to lay more emphasis on the original webpage. On the other hand, more associated content and knowledge may be found when the user views the original webpage, for example, an author's own blog may contain more knowledge and papers in related art, and thus the user experience is improved.

In order to display the original webpage better, different displaying effects may be designed in the client according to settings in the client. In an embodiment of the present disclosure, the search result displaying module 130 is further configured to receive the plurality of search results and display the plurality of search results to the user, to add prompt identifications to the at least part of the plurality of search results, and to display an original webpage of a search result corresponding to a prompt identification to the user if the prompt identification is triggered.

More specifically, the search result displaying module 130 may analyze the search results to know which of the search results have the original webpage and which of the search results do not have the original webpage, and then the client adds the prompt identifications to the search results which have the original webpage (i.e., at least part of the plurality of search results) at appropriate positions, for example, at the left side, the right side, the upper part or the lower part. For example, as shown in Fig. 2(b), for each search result which has an original webpage, the user is informed that the search result has an original webpage by an icon 100 located at the right side of the search result. In addition, the prompt identification may be triggered in various ways, for example, by clicking the prompt identification with a mouse or with a gesture on the screen, or by sliding the prompt identification with the mouse or with a gesture. For example, as shown in Fig. 2(b), the user moves the mouse to the icon, a pop-up box 200 is shown at the right side to display the information of the original webpage to the user and guide the user to perform a further click. The user may click for browsing. If the user moves the mouse away from the icon, the pop-up box 200 is closed. In addition, the user may also participate in the protection of the original webpage. An access of "report the non-original webpage" is displayed in the original webpage of the pop-up box 200. More assistance information may be provided to the search engine through the user's participation, thus aiding to find out the non-original webpage. The search engine may also effectively identify whether the report from the user is real and reliable, find out the effective information and filter the hostile attack information according to some strategies.

It should be understood that, there may be multiple original webpages which are displayed to the user, typically the user may distinguish which one is the real original webpage.

With the client according to embodiments of the present disclosure, the original webpage is prompted via the prompt identification, thus facilitating the reading of the user and further improving the user experience.

In order to implement the above embodiments, the present disclosure further provides a program, when executed by a device, causes the device to execute the search method according to the embodiments of the present disclosure.

With the program according to embodiments of the present disclosure, when providing a search result to the client, the search engine associates the search result with an original webpage thereof, and the original webpage of the search result is displayed as well. On one hand, if the search result is top-ranked, the original webpage of the search result is displayed at the top-ranked position in the case that the original webpage exists. A manner for acquiring the original webpage more conveniently is provided, such that the client may access the webpage easily, thus increasing the probability of clicking the original webpage and causing the user of the client to lay more emphasis on the original webpage. Without changing the ranking of the search results, the user not only gains convenience, but also the respect and the support in action for the original webpage from the search engine are emphasized. On the other hand, more associated content and knowledge may be found when the user views the original webpage, for example, an author's own blog may contain more knowledge and papers in related art, and thus the user experience is improved.

In order to implement the above embodiments, the present disclosure further provides a storage medium having one or more programs stored therein is provided. When executed by a device, the one or more programs cause the device to execute the search method according to the embodiments of the present disclosure.

With the storage medium according to embodiments of the present disclosure, when providing a search result to the client, the search engine associates the search result with an original webpage thereof, and the original webpage of the search result is displayed as well. On one hand, if the search result is top-ranked, the original webpage of the search result is displayed at the top-ranked position in the case that the original webpage exists. A manner for acquiring the original webpage more conveniently is provided, such that the client may access the webpage easily, thus increasing the probability of clicking the original webpage and causing the user of the client to lay more emphasis on the original webpage. Without changing the ranking of the search results, the user not only gains convenience, but also the emphasis and the support for the original webpage from the search engine are embodied. On the other hand, more associated content and knowledge may be found when the user views the original webpage, for example, an author's own blog may contain more knowledge and papers in related art, and thus the user experience is improved.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. A search method, comprising:
acquiring by a search engine a search term sent from a client;
acquiring by the search engine a plurality of search results according to the search term, and acquiring original webpages corresponding to at least part of the plurality of search results respectively; and
providing by the search engine the plurality of search results and the original webpages corresponding to the at least part of the plurality of search results to the client so as to display the plurality of search results and the original webpages via the client.

2. The search method of claim 1, further comprising:
crawling by the search engine a plurality of webpages;
extracting by the search engine characteristic values of the plurality of webpages respectively according to a classification algorithm;
classifying by the search engine the plurality of webpages according to the characteristic values so as to establish a plurality of classifications; and
analyzing by the search engine webpages in a classification so as to acquire an original webpage in the classification.

3. The search method of claim 2, wherein analyzing by the search engine webpages in a classification so as to acquire an original webpage in the classification comprises:
acquiring by the search engine a time of crawling each webpage in the classification; and
acquiring by the search engine the original webpage in the classification according to the time of crawling each webpage in the classification.

4. The search method of claim 3, wherein analyzing by the search engine webpages in a classification so as to acquire an original webpage in the classification further comprises:
acquiring by the search engine reliability information of each webpage in the classification, so as to acquire the original webpage in the classification according to the time of crawling each webpage in the classification and the reliability information of each webpage in the classification.

5. The search method of claim 4, wherein the reliability information of a webpage comprises one or more of provenance information of the webpage, quality information of the webpage and anti-cheat judgment information.

6. A search system, comprising a client and a search engine, wherein
the client is configured to sent a search term to the search engine, and to display a content returned from the search engine; and
the search engine is configured to:
acquire the search term;
acquire a plurality of search results according to the search term;
acquire original webpages corresponding to at least part of the plurality of search results respectively; and
provide the plurality of search results and the original webpages corresponding to the at least part of the plurality of search results to the client.

7. The search system of claim 6, wherein the search engine is further configured to:
crawl a plurality of webpages;
extract characteristic values of the plurality of webpages respectively according to a classification algorithm;
classify the plurality of webpages according to the characteristic values so as to establish a plurality of classifications; and
analyze webpages in a classification so as to acquire an original webpage in the classification.

8. The search system of claim 7, wherein the search engine is further configured to:
acquire a time of crawling each webpage in the classification and acquire the original webpage in the classification according to the time of crawling each webpage in the classification.

9. The search system of claim 8, wherein the search engine is further configured to:
acquire reliability information of each webpage in the classification and acquire the original webpage in the classification according to the time of crawling each webpage in the classification and the reliability information of each webpage in the classification.

10. The search system of claim 9, wherein the reliability information of a webpage comprises one or more of provenance information of the webpage, quality information of the webpage and anti-cheat judgment information.

11. The search system of any one of claims 6-10, wherein the client is further configured to:
receive the plurality of search results and display the plurality of search results to a user;
add prompt identifications to the at least part of the plurality of search results respectively; and
display an original webpage corresponding to a search result to the user, if a prompt identification corresponding to the search result is triggered.

12. A search engine, comprising:
a search term acquiring module, configured to acquire a search term sent from a client;
a search result acquiring module, configured to acquire a plurality of search results according to the search term, and to acquire original webpages corresponding to at least part of the plurality of search results respectively; and
a search result providing module, configured to provide the plurality of search results and the original webpages corresponding to the at least part of the plurality of search results to the client so as to display the plurality of search results and the original webpages via the client.

13. The search engine of claim 12, further comprising:
a webpage crawling module, configured to crawl a plurality of webpages;
a webpage classifying module, configured to extract characteristic values of the plurality of webpages respectively according to a classification algorithm, and to classify the plurality of webpages according to the characteristic values so as to establish a plurality of classifications; and
an original webpage analyzing module, configured to analyze webpages in a classification so as to acquire an original webpage in the classification.

14. The search engine of claim 13, wherein the original webpage analyzing module is further configured to:
acquire a time of crawling each webpage in the classification and to acquire the original webpage in the classification according to the time of crawling each webpage in the classification.

15. The search engine of claim 14, wherein the original webpage analyzing module is further configured to:
acquire reliability information of each webpage in the classification and acquire the original webpage in the classification according to the time of crawling each webpage in the classification and the reliability information of each webpage in the classification.

16. The search apparatus of claim 15, wherein the reliability information of a webpage comprises one or more of provenance information of the webpage, quality information of the webpage and anti-cheat judgment information.

17. A client, comprising:
a search term sending module, configured to send a search term to a search engine;
a search result acquiring module, configured to acquire a plurality of search results and original webpages corresponding to at least part of the plurality of search results sent by the search engine according to the search term; and
a search result displaying module, configured to display the plurality of search results and the original webpages corresponding to the at least part of the plurality of search results.

18. The client of claim 17, wherein the search result displaying module is further configured to:
receive the plurality of search results and display the plurality of search results to a user;
add prompt identifications to the at least part of the plurality of search results respectively; and
display an original webpage corresponding to a search result to the user, if a prompt identification corresponding to the search result is triggered.

19. A program, when executed by a device, causing the device to execute the search method according to any one of claims 1-5.

20. A storage medium having a program stored therein, wherein when executed by a device, the program causes the device to execute the search method according to any one of claims 1-5.
